# EUROPEAN PATENT APPLICATION

(11) **EP 2 293 607 A2**
(43) Date of publication of application: **09.03.2011**
(21) Application number: 10174908.3
(22) Date of filing: 01.09.2010
(51) Int. Cl.: H04W 8/02

(54) **Radio communication system and method**

(30) Priority: 04.09.2009 CN 200910173029
(71) Applicant: Hitachi Ltd., Tokyo 100-8280 (JP)
(72) Inventor: Yoshiuchi, Hideya, Tokyo 100-8220 (JP); Yang, Peng, 100190 Beijing (CN); Ma, Yuanchen, 100190 Beijing (CN)
(74) Representative: MERH-IP Matias Erny Reichl Hoffmann

(57) **Abstract**

A radio communication system for connecting mobile nodes (1) to public network, include base stations (5) connected to mobile nodes (1) by radio, node registration devices (2) connected to control the stations (5) and register node registration information representing contents of node connection to the node registration device (2) through the station (5) into node information management device (3) which is connected to public network and manages mobile node address information in registration information registered by the node registration devices (2). A combination of the base station (5) and node registration device (2) controlling the station and a combination of the station (5), node registration device (2) controlling the station (5), other node registration device (2) and one or a plurality of the node information management device (3) constitute different communication routes any of which is utilized to realize connection from node (1) to public network.

## Description

### BACKGROUND OF THE INVENTION

The present invention relates to a radio communication system and method of providing hybrid registration to proxy mobile IPv6 protocol in a mobile communication network and more particularly to a method of utilizing new mobile access gateway and local mobility agent to perform hybrid registration in the mobile communication system. The present invention provides equipment and method of supporting flexible data routing with high efficiency. The mobile communication network described here is the mobile communication system which supports at least multiple base station coordinated service.

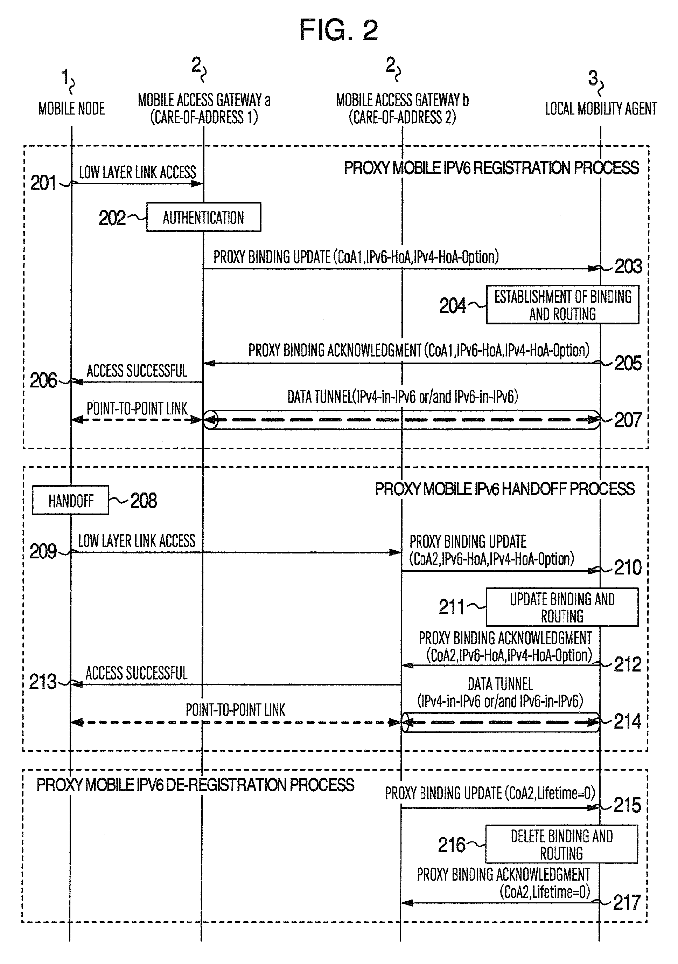

The proxy mobile IPv6 technique (PMIP6) is a standard established recently by IETF standard organization (refer to PFC5213 and http://www.ietf.org/rfc/rfc5213.txt). This technique is also named network-led mobility management technique and can provide the function similar to the mobile IPv6 technique, although it is not required to reconstruct network protocol stack of mobile nodes extensively. That is, task of the mobility management is performed by equipment on the side of network. In proxy mobile IPv6 network, usual nodes which do not support mobile IPv6 protocol stack can access external network and at the same time are not required to change IP address. As compared with the mobile IPv6 technique, equipment on the side of network of the proxy mobile IPv6 is required to track movement of node and trigger signaling related thereto. The proxy mobile IPv6 technique must support IPv6 nodes, IPv4 nodes and IPv4/IPv6 dual-stack nodes on the basis of technical requirements of IETF standard. Fig. 2 is a flow chart showing signaling of the proxy mobile IPv6 technique, which contains IPv6 nodes, IPv4 nodes and IPv4/IPv6 dual stacks.

The network side of the proxy mobile IPv6 is mainly composed of mobile access gateways (MAG) and local mobility agents (LMG). In the actual mobile network, the two equipments have mainly some situations as follows.

Situation 1 (in long term evolution (LTE) network): the case where mobile access gateways reside in serving gateway (S-GW) and local mobility agents reside in packet data network (PDN) gateway (P-GW).

Situation 2 (in world interoperability for microwave access (WiMAX) network): the case where mobile access gateways reside in access service network (ASN) and local mobility agents reside in connectivity service network (CSN) (core service network) and another case where both the equipments are integrated in ASN (how to use the proxy mobile IPv6 is still being studied continuously in WiMAX forum).

Situation 3 (in future mobile communication network established by Chinese future mobile communication forum): the case where mobile access gateways reside in radio base station and local mobility agents reside in gateway).

Heretofore, the technique for the proxy mobile IPv6 is improved as follows. Patent publication WO 2008/134980 A1 discloses that network side selects concrete mobility management technique. Patent publication JP-A-2006-114946 discloses that home agent is selected for mobile IPv6 network and network mobility (NEMO) network. Patent publication GB 2414903 A discloses that current care-of-address (CoA) is selected by DNS method.

### SUMMARY OF THE INVENTION

Application of the proxy mobile IPv6 presupposes the following assumption.
1) Only one mobile access gateway can register one link of node in the proxy mobile IPv6.
2) Mobile access gateway can register only local mobility agent.
3) Mobile access gateway can transfer data from node to external network within 1 hop.

However, in a certain situation, there is a case where the above assumption is not satisfied. For example, it is the case of multiple base station coordinated service in IMT-Advanced of the situation 1. In IMT-Advance, one mobile node can be connected to a plurality of radio base stations so that data throughput of radio interface can be increased. The plurality of radio base stations are sometimes managed by one mobile access gateway and sometimes managed by a plurality of mobile access gateways. At this time, the situation that the plurality of mobile access gateway provides service to one link of mobile node occurs.

There is a case where the current service mobile access gateway in the situation 2 utilizes another mobile access gateway as relay service. Sometimes, when connection between the current mobile access gateway and the local mobility agent is disconnected and there is no usable other local mobility agent, the mobile access gateway utilizes another mobile access gateway to perform alternative routing.

There is a case where the current mobile access gateway in the situation 3 is invalid or overloaded. In such a case, mobile node and local mobility agent utilize another alternative mobile access gateway to provide alternative service.

There is a case where the mobile access gateway in the situation 4 directly routes data packet of mobile node to the Internet. In the current proxy mobile IPv6 standard, optimization of local routing is not supported. However, mobile network operating company begins to demand provision of local routing optimization already and local mobility agent does not participate in routing of data packet. Furthermore, when invalidity occurs in local mobility agent, the mobile access gateway sometimes selects to directly route data packet of mobile node to the Internet.

Accordingly, the current proxy mobile IPv6 network cannot provide satisfactory support in the above situations 1 to 4 and it is necessary to improve function of the proxy mobile IPv6 by new solution method. Functional improvement in the following some main respects is expected in a corresponding manner to the 4 situations described above.
1) One or more mobile access gateway permits to provide service to one link of one mobile node.
2) Mobile access gateway can route data packet to local mobility agent via still another mobile access gateway.
3) Local mobile agent can select another mobile access gateway.
4) Main service mobile access gateway can transmit data packet to mobile node via another mobile access gateway.

Heretofore, there are improved techniques for the proxy mobile IPv6 as follows. In the patent publication WO 2008/134980 A1 filed by "HUAWEI TECHNOLOGIES", the network side can select concrete mobility management technique, although when proxy mobile IPv6 technique is selected, only most fundamental function can be supported and the above improved function cannot be supported. In the patent publication JP-A-2006-114946 filed by "Hitachi, Ltd.", home agent can be selected for mobile IPv6 network and network mobility (NEMO) network, although such a method cannot be applied to proxy mobile IPv6 network. In the patent publication GB 2414903 B filed by "Intel", the current care-of-address (CoA) can be selected by DMS method, although only one care-of-address of mobile access gateway can be finally selected for registration.

Routing optimization technique is contained in RFC 5213 standard, although this technique requires that both of communication party and mobile node reside in the same proxy mobile IPv6 network area and the requirement of the functional improvement cannot be satisfied.

In view of the above problems, it is an object of the present invention to provide a radio communication system and method capable of providing hybrid registration for proxy mobile IPv6 protocol.

In order to achieve the above object, according to an aspect of the present invention, there is provided a radio communication system which connects mobile nodes to a public network. The radio communication system includes base stations connected to the mobile nodes by radio, node registration devices which are connected to the base stations to control the base stations and register registration information of the mobile node representing contents of connection of the mobile nodes to the node registration devices through the base stations into node information management device and the node information management devices to manage address information of the mobile nodes in the registration information registered by the node registration devices. The radio communication system connects the mobile nodes to a public network. A combination of the base station and the node registration device to control the base station and a combination of the base station, the node registration device to control the base station, another node registration device and one or a plurality of equipments of the node information management device configure a plurality of different communication routes and the radio communication system utilizes any of the plurality of different communication routes to realize connection from the mobile nodes to the public network.

In the radio communication system, preferably, the node registration device registers route information containing address information of other node registration devices concerning the communication route to be utilized into the node information management device in addition to the registration information and the node information management device transmits, after reception of the registration information having the route information added thereto, hybrid registration indication to the other node registration device indicated by the address information on the basis of the address information contained in the route information and returns, after reception of hybrid registration acknowledgment from the other node registration device, registration acknowledgment containing the route information to the node registration device to which the registration information has been transmitted. The node registration device which has received the registration acknowledgment starts connection using the communication route from the mobile node to the public network in coordination with the other node registration device.

In a radio communication system, preferably, the plurality of communication route contains at least first to fourth communication routes. The first communication route extends from one base station which makes radio communication with the mobile node through one node registration device which controls the base station to the node information management device and then reaches the public network. The second communication route extends from a plurality of base stations which make radio communication with the mobile node through a plurality of node registration devices which control the base stations to the node information management device and then reaches the public network. The third communication route extends from one base station which makes radio communication with the mobile node through one node registration device which controls the base station and further another node registration device to the node information management device and then reaches the public network. The fourth communication route extends from one base station which makes radio communication with the mobile node through one node registration device which controls the base station to the public network directly without passing through the node information management device.

In the radio communication system, preferably, the communication route can be handed off or changed over among the first, second and third communication routes mutually and the communication route can be handed off between the first and fourth communication routes mutually.

In the radio communication system, preferably, mutual handoff among the first, second and third communication routes is performed on the basis of judgment as to whether the mobile node requires multiple base station coordinated service or not, so that when it is judged that multiple base station coordinated service is not required, the communication route is handed off to the first communication route and when it is judged that multiple base station coordinated service is required, the communication route is handed off to the second or third communication route on the basis of connection situation between currently used node registration device and node information management device. Mutual handoff between the first and fourth communication routes is performed on the basis of whether the node registration device and the node information management device support direct routing on the basis of policy designated by local mobile operating company, so that when it is judged that direct routing is supported and it is decided that the node registration device performs direct routing, the communication route is handed off to the fourth communication route.

The radio communication system preferably adopts proxy mobile IPv6 protocol.

According to another aspect of the present invention, there is provided a radio communication method in the radio communication system which connects the mobile nodes to the public network. The radio communication system includes base stations, node registration devices and node information management devices. The radio communication method comprises a first step in which the base station is connected to the mobile node by radio, a second step in which the node registration device is connected to the base station to control the base station and register registration information of the mobile node representing contents of connection of the mobile node to the node registration device through the base station into node information management device and a third step in which the node information management device is connected to a public network and manages address information of the mobile node in the registration information registered by the node registration device. A combination of the base station and the node registration device to control the base station and a combination of the base station, the node registration device to control the base station, another node registration device and one or a plurality of equipments of the node information management device configure a plurality of different communication routes and the radio communication system utilizes any of the plurality of different communication routes to realize connection from the mobile node to the public network.

According to the radio communication system and method of the present invention, hybrid registration can be performed under proxy mobile IPv6 protocol. That is, new mobile access gateway and local mobile agent can be utilized to perform hybrid registration in addition to conventional basic registration method. Thus, there can be provided the equipment and method of supporting flexible data routing with high efficiency.

Other objects, features and advantages of the invention will become apparent from the following description of the embodiments of the invention taken in conjunction with the accompanying drawings.

### BRIEF DESCRIPTION OF THE DRAWINGS

Fig. 1 illustrates network architecture of a proxy mobile IPv6 system;
Fig. 2 is a flow chart showing registration, handoff and de-registration of conventional proxy mobile IPv6;
Fig. 3 schematically illustrates different hybrid registration modes realized by a radio communication system according to an embodiment of the present invention;
Fig. 4 shows data structure of hybrid registration option (HRO) according to the embodiment of the present invention;
Fig. 5 shows data structure of alternative mobile access gateway option (BMO) according to the embodiment of the present invention;
Fig. 6 shows data structure of hybrid registration indication message head (HRI) according to the embodiment of the present invention;
Fig. 7 shows data structure of hybrid registration acknowledgment message head (HRA) according to the embodiment of the present invention;
Fig. 8 is a flow chart showing hybrid registration corresponding to the illustrated modes of Fig. 3 according to the embodiment of the present invention;
Fig. 9 is a flow chart of deciding registration mode when mobile node accesses proxy mobile IPv6 network according to the embodiment of the present invention;
Fig. 10 is a diagram illustrating mutual change relation between different modes according to the embodiment of the present invention;
Fig. 11 shows concrete example of change from mode 0 to mode 1 according to the embodiment of the present invention;
Fig. 12 shows concrete example of change from mode 3 to mode 0 according to the embodiment of the present invention;
Fig. 13 shows concrete example of change from mode 1 to mode 3 according to the embodiment of the present invention; and
Fig. 14 shows contents of agent IPv6 binding table according to the embodiment of the present invention.

### DESCRIPTION OF THE EMBODIMENTS

Embodiments of the present invention are described on the basis of 3GPP LTE-A communication system. The present invention can apply even to a radio communication network which supports another multiple base station coordinated service.

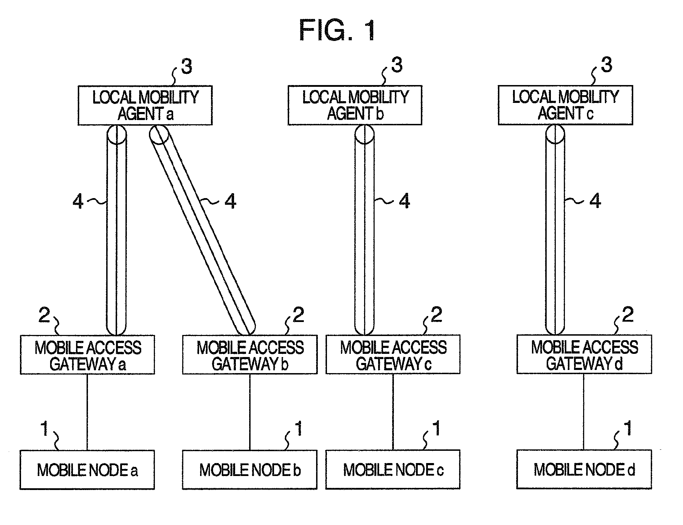

Fig. 1 illustrates network architecture of proxy mobile IPv6 system. Mobile nodes (mobile nodes a to d) 1, mobile access gateways (mobile access gateways a to d) (MAG) (also named "node registration device" in the present invention) 2 and local mobility agents (local mobility agents a to c) (LMA) (also named "node information management devices" in the present invention) 3 are main nodes of the proxy mobile IPv6 network. The mobile node 1 is connected to the mobile access gateway 2 through a mobile access network (realized by base station not shown). The mobile access gateway 2 corresponds to access gateway of the mobile network substantially. The local mobility agent should reside in home network of the mobile node 1 logically but may be disposed at peripheral part of external network actually. When data routing is performed, the mobile node 1 transmits up-link data packet to the mobile access gateway 2 through mobile access network. After examination of validity of data packet, the mobile access gateway 2 capsulizes the up-link data packet to IP data tunnel 4 to be transmitted to the local mobility agent 3. After IP data tunnel is de-capsulized, original up-link data packet is transmitted to network node designated by destination address. When down-link data packet is required to be transmitted to the mobile node 1, a nearest routing node first transmits data packet to network interface which is in charge of proxy mobile IPv6 service of local mobility agents 3. After down-link data packet is capsulized to IP tunnel 4, the down-link data packet is transmitted to mobile access gateway 2. After de-capsulization, internal original down-link data packet is transmitted to mobile node 1 designated by destination address. In this process, main nodes in proxy mobile IPv6 network may be IPv4 or IPv6 or IPv4/IPv6 dual stack nodes.

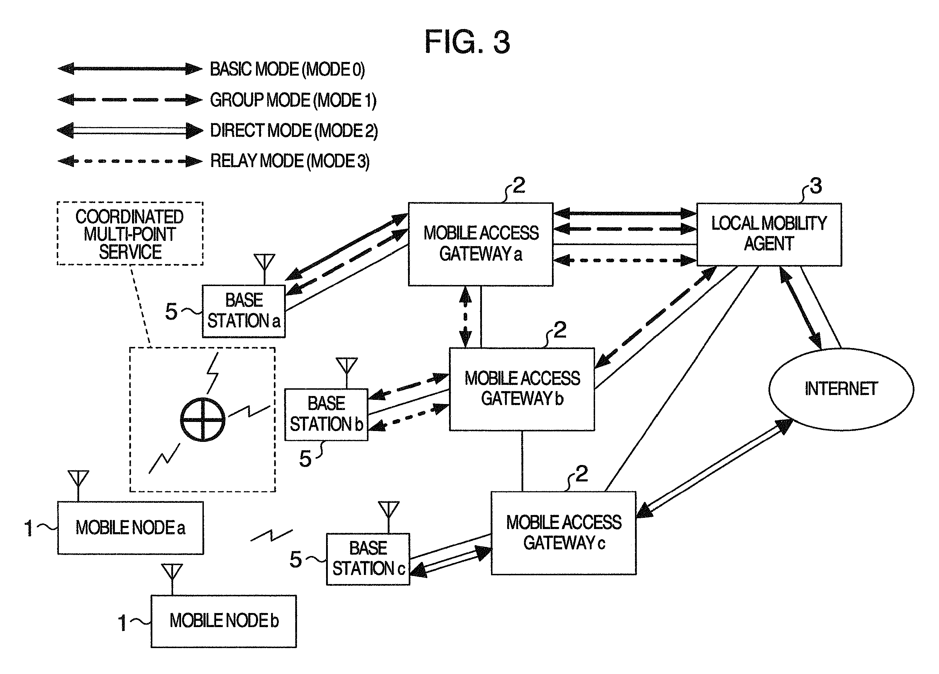

Fig. 2 is a flow chart showing registration, handoff and de-registration of conventional proxy mobile IPv6. This flow chart contains service for IPv6 node, IPv4 node and IPv4/IPv6 dual stack node. In registration process of proxy mobile IPv6 network, the mobile node 1 first establishes low layer connection with mobile network access point and is connected to one mobile access gateway (mobile access gateway a) 2 (201). Establishment of low layer connection is realized by mobile communication base station (not shown and refer to Fig. 3). Mobile node 1 first establishes data route of physical layer and link layer between mobile communication base station and mobile node 1 and then establishes relation between mobile access gateway 2 and mobile node 1 by high layer signaling. In establishment of low layer connection, a known method in this prior art can be adopted but since it is not a core part of the present invention, concrete description thereof is omitted.

After possible low layer authentication (202), the mobile access gateway 2 transmits proxy binding update message (also named "registration information" in the present invention) to local mobility agent 3 (203). The proxy binding update message transmitted by the mobile access gateway 2 contains at least information indicating that the mobile node 1 has been connected to the mobile access gateway 2 via base station 5 controlled by the mobile access gateway 2. Accordingly, the mobile access gateway 2 is also named "node registration device".

The local mobility agent 3 has the function of receiving registered message from mobile access gateway 2 and managing at least address information indicating address of mobile node 1 contained in the registered information. Accordingly, the local mobility agent 3 is also named "node information management device".

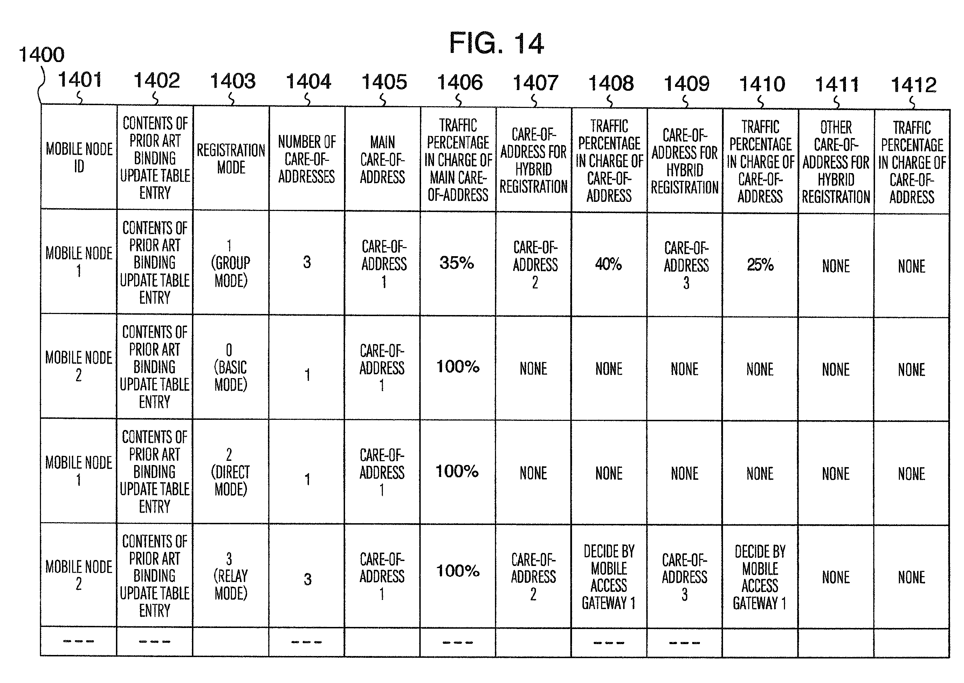

When authentication of message succeeds, the local mobility agent 3 establishes binding update table (refer to later description of Fig. 14 for detail of binding table) and routing for data packet transfer locally (204). Thereafter, the local mobility agent 3 transmits proxy binding acknowledgment message (proxy binding acknowledgment) to mobile access gateway 2 (205). After the mobile access gateway 2 receives the message, the mobile access gateway 2 transmits message indicating that access is successful to mobile node 1 (206). As described above, registration process that mobile node 1 accesses agent IPv6 network is completed and data transfer route of up link and down link is established (207).

When it is necessary that the mobile node 1 is handed off to mobile network managed by another mobile access gateway (mobile access gateway b) (208), the mobile node is first connected to new mobile access gateway (mobile access gateway b) as described in above step 201 (209). Thereafter, the mobile access gateway b transmits proxy binding update message to local mobility agent 3 in the same manner as operation of the mobile access gateway a in the registration process (210). When authentication of the message succeeds, local mobility agent 3 updates former binding update table and routing for data packet transfer (211). Then, the local mobility agent 3 transmits proxy binding acknowledgment message to mobile access gateway b (proxy binding acknowledgment) (212). After the mobile access gateway b receives the message, the mobile access gateway also transmits message indicating that access is successful to mobile node 1. As described above, handoff process in agent IPv6 network of mobile node 1 is completed and data transfer route of up link and down link is handed off to new route (214).

In the de-registration process, the currently registered mobile access gateway (mobile access gateway b) of mobile node transmits proxy binding update to local mobility agent 3 (215) and instructs cancellation of connection. The local mobility agent 3 cancels related binding and routing (216) and thereafter transmits proxy binding acknowledgment indicating cancellation of connection to mobile access gateway b (217) to complete de-registration process. Furthermore, the local mobility agent 3 also transmits binding revocation message to former (before handoff) mobile access gateway 2 (mobile access gateway a) to retrieve partial resource. In Fig. 2, this option process is not shown.

In the data routing (214 and 207) established in the above process, point-to-point data route between mobile access gateway 2 and mobile node 1 is transferred to mobile communication base station (base station 5 of Fig. 3) not shown in Fig. 2.

Fig. 3 schematically illustrates different hybrid registration modes realized by radio communication system according to an embodiment of the present invention. Fig. 3 shows different communication routes between nodes of network in different modes and some modes are listed in the hybrid registration of the present invention as follows.

Mode 0: Basic registration mode (communication route shown by solid line with arrow of Fig. 3 and hereinafter abbreviated to "basic mode"). Mobile node reaches local mobility agent 3 from one base station (base station a) which makes radio communication with the mobile node through one mobile access gateway (mobile access gateway a) which controls the base station and then reaches public network (the Internet in the embodiment).
Mode 1: Group MAG registration mode (communication route shown by broken line with arrow of Fig. 3 and hereinafter abbreviated to "group mode"). Mobile node reaches local mobility agent 3 from a plurality of base stations (base stations a and b) which make radio communication with the mobile node through a plurality of mobile access gateways (mobile access gateways a and b) which control the base stations and then reaches the Internet.
Mode 2: Direct MAG registration mode (communication route shown by two parallel lines with arrow of Fig. 3 and hereinafter abbreviated to "direct mode"). Mobile node reaches the Internet from one base station (base station c) which makes radio communication with the mobile node through mobile access gateway (mobile access gateway c) which controls the base station without passing through the local mobility agent 3 directly.
Mode 3: MAG relay registration mode (communication route shown by dotted line with arrow of Fig. 3 and hereinafter abbreviated to "relay mode"). Mobile node reaches local mobility agent 3 from one base station (base station b) which makes radio communication with the mobile node through mobile access gateway (mobile access gateway b) which controls the base station and further another mobile access gateway (mobile access gateway a) and then reaches the Internet.

Fig. 3 shows different communication routes formed between nodes in different modes. The communication routes formed between nodes in the modes 0 to 3 are merely one example. The present invention can be realized by other modes and suitable communication routes. For example, in the mode 1 (group mode), mobile access gateway for providing service to mobile node by base station may be a combination of mobile access gateways a and c or a combination of three mobile access gateways a, b and c instead of a combination of mobile access gateways a and b and the point is that two or more mobile access gateways may provide service to one mobile node. Moreover, in the mode 3 (relay mode), relay mobile access gateway may be mobile access gateway c instead of mobile access gateway a or relay may be made by two or more mobile access gateways. The point is that mobile access gateway may route data packet through still another mobile access gateway to local mobility agent.

Technical experts in this field will understand the following on the basis of the above example. Configuration of communication route contains still another possibility and if configured communication route can realize the object of hybrid registration of the present invention, there is a possibility that it falls within the protection scope of the present invention. For example, the combination of nodes configuring different communication routes contains a combination of base station, mobile access gateway (node registration device) for controlling base station and any number of other mobile access gateways (node registration device) or any number of local mobility agents (node information management devices) added thereto and it is a matter of course that communication route can be configured only by a combination of base station and mobile access gateway for controlling the base station without passing through local mobility agent as the direct mode. The point is that in the present invention a combination of base station and node registration device for controlling base station and a combination of base station, node registration device for controlling the base station, other node registration device and one or a plurality of equipments of node information management devices configure a plurality of different communication route and the radio communication system of the present invention utilizes any of the plurality of different communication routes to realize connection from mobile node to public network.

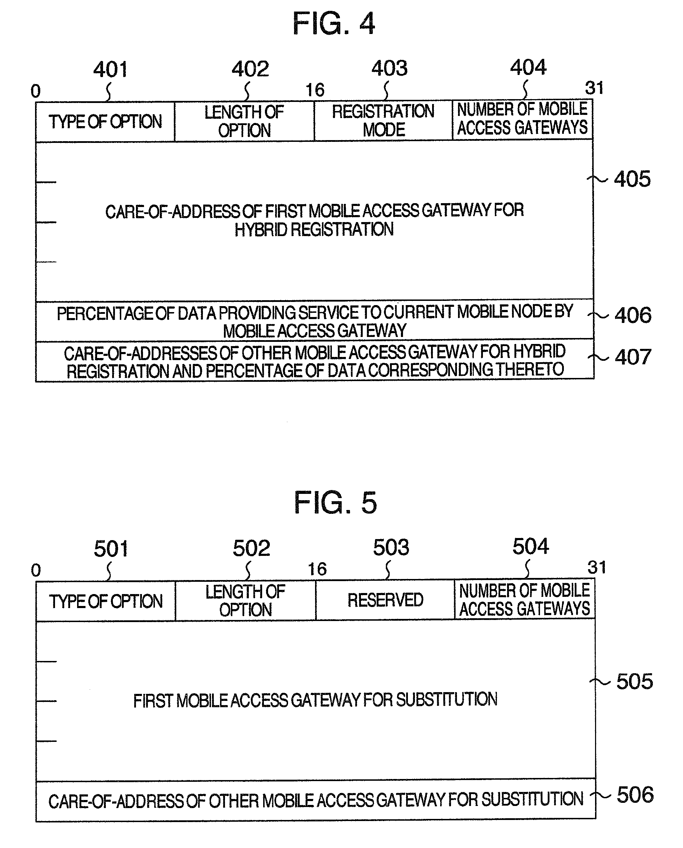

Figs. 4 to 7 show formats of signaling and signaling expansion of proxy mobile IPv6 defined newly. The use method thereof is shown in a flow chart of Fig. 3.

Fig. 4 shows data structure of hybrid registration option (HRO) according to an embodiment of the present invention. 401 denotes type of option, which is distributed by IANA concretely at the time of standardization of IETF. 402 denotes length of byte of the option. 403 denotes mode of registration and as representative values, 0x00 represents mode 0, 0x01 mode 1, 0x02 mode 2 and 0x03 mode 3. Maker or operating company can more extend the modes in accordance to demand. 404 denotes the number of mobile access gateways described later in the option, 405 care-of-address of first mobile access gateway for hybrid registration, 406 percentage of data providing service to current mobile node by mobile access gateway, and 407 care-of-addresses of other mobile access gateway for hybrid registration and percentage of data corresponding thereto. The hybrid registration option of the present invention is carried in message body of proxy mobile IPv6 and specifies mode of hybrid registration and other mobile access gateway related thereto. Numerals (0, 16 and 31) shown above the items of Fig. 4 represent bit positions of the items in message and are the same as in Figs. 5 to 7.

Fig. 5 shows data structure of option (BMO) of mobile access gateway for substitution according to an embodiment of the present invention. 501 denotes type of the option, which is distributed by IANA concretely at the time of standardization of IETF. 502 denotes length of byte of the option. 503 denotes temporary reservation, which is used for expansion of future function. 504 denotes the number of mobile access gateways described later in the option, 505 care-of-address of first mobile access gateway for substitution, and 506 care-of-address of other mobile access gateways for substitution. The option of substitute mobile access gateway in the present invention is carried in message body of proxy mobile IPv6 and specifies other mobile access gateway for substitution and recovery of invalidity.

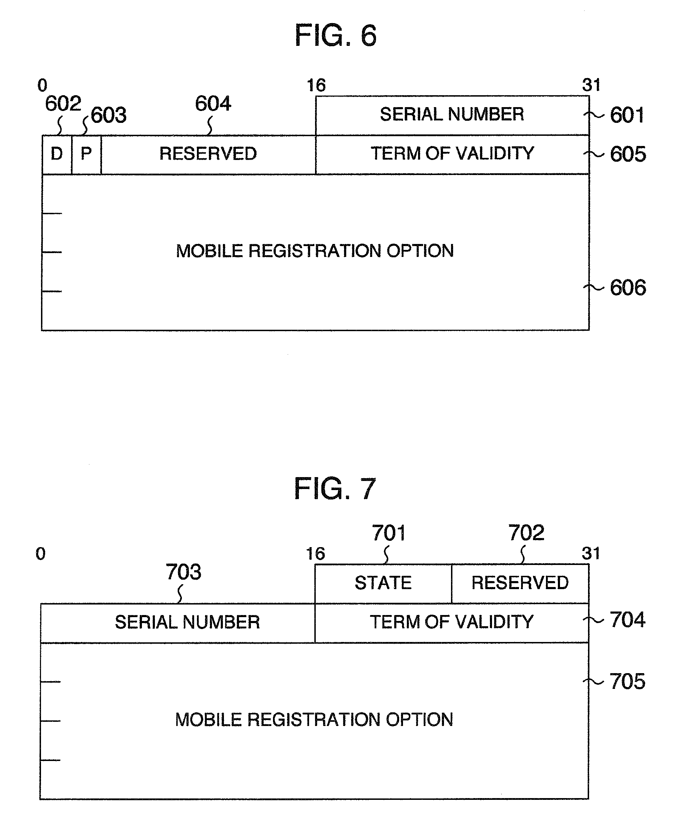

Fig. 6 shows data structure of hybrid registration indication message head (HRI) according to an embodiment of the present invention. 601 denotes serial number of the message, which is used to identify interactive process of a pair of message and prevents reproductive attack. D bit 602 represents direction of the message and as an example "0" represents direction from local mobility agent to mobile access gateway and "1" represents direction from mobile access gateway to local mobility agent. p bit 603 is used for mobile access gateway of substitution or recovery of invalidity and as an example "0" represents demand of substitution and "1" represents start of substitution. 604 denotes temporary reservation, which is used for expansion of future function. 605 denotes term of validity, which restricts longest period that hybrid registration acknowledgment message of the other party is returned. 606 denotes other mobile registration option. Hybrid registration indication message in the present invention is used to make local mobility agent notify the message to mobile access gateway related to other hybrid registration. The message is used even when binding update is inconvenient and mobile access gateway notifies the contents related to hybrid registration to local mobility agent.

Fig. 7 shows data structure of hybrid registration acknowledgment message head (HRI) according to an embodiment of the present invention. This message is acknowledgment message to hybrid registration indication message. 701 denotes state value indicating state of acknowledgment, which may be success or failure due to certain cause. 702 denotes temporary reservation, which is used for expansion of future function. 703 denotes serial number of the message, which is the same as the serial number 601 in the corresponding hybrid registration indication message and is used to identify interactive process of a pair of message and prevents reproductive attack. 705 denotes other mobile registration option.

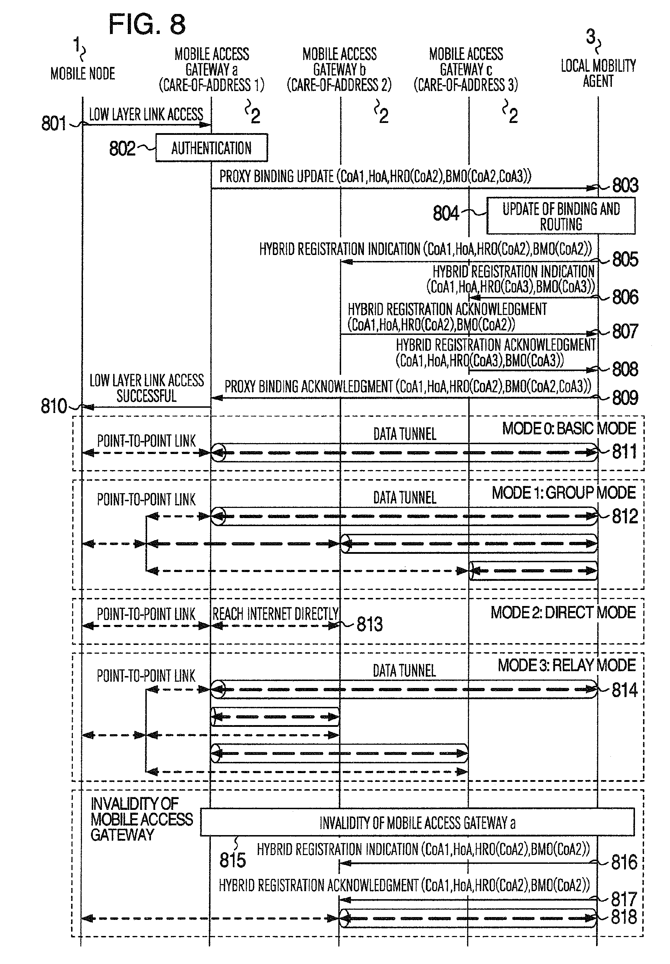

Fig. 8 is a flow chart showing hybrid registration corresponding to the modes illustrated in Fig. 3 according to an embodiment of the present invention. In this flow chart, similarly to Fig. 2, in first step (801), low layer connection is established by mobile communication base station 5 (Fig. 3). The mobile node 1 first establishes data routes of physical layer and link layer between the mobile communication base station 5 and the mobile node 1 and thereafter establishes relation by high layer signaling and mobile access gateway 2.

In Fig. 8, description of the same steps as the process of the conventional proxy mobile IPv6 of Fig. 2 (for example, authentication of 802, update of binding and routing of 804 and the like) are omitted.

When the hybrid registration mode in the present invention is supported, it is necessary to add HRO and BMO (also named "route information" in the present invention) shown in Figs. 4 and 5 in update of proxy binding (also named "registration information" in the present invention) transmitted from mobile access gateway a to local mobility agent. In this information, main care-of-address (care-of- address 1 of mobile access gateway a in this embodiment) should be added to source address of the message or selectable care-of-address option on the basis of RFC 5213. Care-of-address related to other mobile access gateway is added in HRO area. Care-of-address of alternatively selected mobile access gateway is contained in BMO. When local mobility agent receives the binding update, the local mobility agent examines HRO and BMO and transmits HRI message (also named "hybrid registration indication" in the present invention) shown in Fig. 6 to other related mobile access gateway (805 and 806). When local mobility agent receives HRA message (also named "hybrid registration acknowledgment" in the present invention) (807 and 808) from other mobile access gateway, local mobility agent updates local binding table and transmits proxy binding acknowledgment (also named "registration acknowledgment" in the present invention) to main mobile access gateway. When the main mobile access gateway receives the proxy binding acknowledgment, the main mobile access gateway starts service of connecting from mobile node 1 to the Internet in accordance with modes 0, 1, 2 and 3 in coordination with related mobile access gateway concerning HRO and BMO. In Fig. 8, routing methods of various modes and at time of invalidity of mobile access gateway are shown. In this method, point-to-point data route between mobile access gateway 2 and mobile node 1 is transferred by mobile communication base station 5 in established data routing 811, 812, 813, 814 and 818.

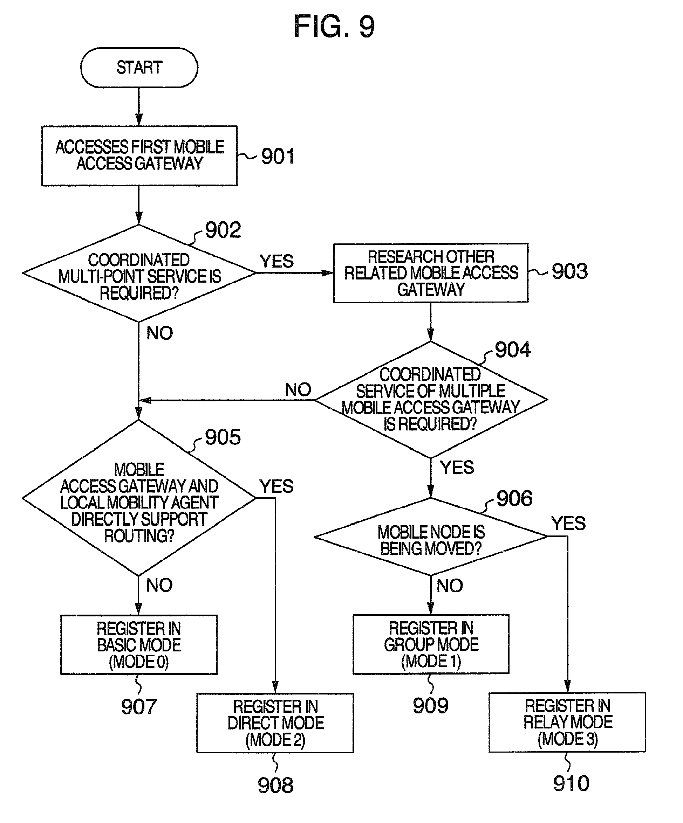

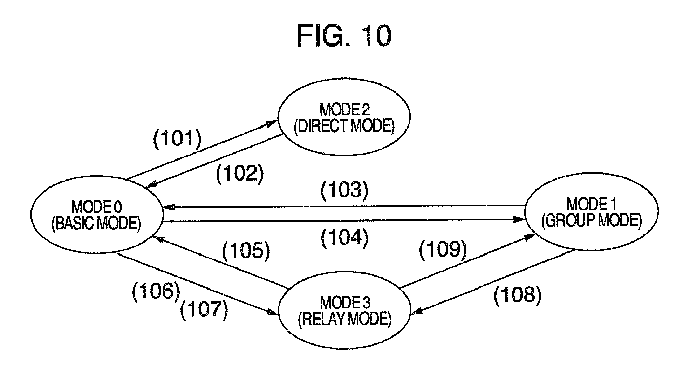

In the hybrid proxy mobile IPv6 registration of the present invention, the decision method of the registration mode is as shown in Figs. 9 and 10. Fig. 9 is a flow chart of deciding registration mode when mobile node accesses proxy mobile IPv6 network according to an embodiment of the present invention. When mobile node is connected to first mobile access gateway (main mobile access gateway) through authentication of access network (901), network side is required to decide whether multiple base station coordinated service to the mobile node is required or not (902). When coordinated service by multiple base stations is required (901: yes), the main mobile access gateway selects related mobile access gateway on the basis of neighboring information in proxy mobile IPv6 network (903). When it is necessary that another mobile access gateway is added to service (904: yes), mobile state of mobile node is further judged (906). When mobile node is not moved (906: no) (for example, fixed node or fixed note personal computer used by a certain company), registration is performed using mode 1 (group mode) (909). When mobile node is being moved (906: yes), main service mobile access gateway and local mobility agent are registered in mode 3 (relay mode) of the present invention (910) since section of dynamic data flow in local mobility agent is not clear. When it is decided that multiple base station coordinated service is not applied to main service mobile access gateway (902: no), it is judged whether mobile access gateway and local mobility agent directly support routing (905), for example, on the basis of policy designated by local mobile operating company and when routing is not directly supported (905: no), registration is performed in mode 0 (basic mode) (907). When routing is supported directly (905: yes), registration is performed in mode 2 (direct mode) (908). When registration mode is decided, the process shown in Fig. 8 is utilized to perform registration.

The judgment process shown in Fig. 9 is merely an example for describing the embodiment of the present invention and the present invention is not limited thereto. Another embodiment for judgment standard or judgment sequence of selection among different modes is considered. For example, in Fig. 9, when it is judged that coordinated service of multiple mobile access gateway is required (904: yes), it is explained that selection standard between modes 1 and 3 is based on whether mobile node is moved (906) by way of example, although when mobile node is being moved, section of dynamic data flow of local mobility agent is difficult and accordingly relay mode (mode 3) passing through MAG relay can be selected. However, the present invention is not limited thereto and when coordinated service of multiple mobile access gateway is required, selection between modes 1 and 3 can be made on the basis of whether mobile node can be moved or standard except mobile speed. For example, when connection between current mobile access gateway and local mobility agent is disconnected or connection therebetween is invalid or overloaded due to other situation, mode 3 can be selected from modes 1 and 3 to be relayed. In brief, selection between modes 1 and 3 is decided by connection situation between mobile access gateway and local mobility agent being used currently in such situation and most rational method can be selected on the basis of the connection situation.

Fig. 10 is a schematic diagram illustrating mutual change relation between different modes according to an embodiment of the present invention. Main conditions related to Fig. 10 and corresponding mode change are as follows.
(101) Mode 0 to mode 2: when it is decided that main mobile access gateway requires to adopt MAG registration mode directly (decision can be made by local policy or on the basis of invalidity of local mobility agent), main mobile access gateway can be changed from basic mode to direct mode by re-registration.
(102) Mode 2 to mode 0: main mobile access gateway can return from direct mode to basic mode when convenient or manually.
(103) Mode 1 to mode 0: main mobile access gateway can return from group mode to basic mode when coordination of multiple base stations is not required.
(104) Mode 0 to mode 1: main mobile access gateway requests re-registration to group mode when multiple base station coordinated service for mobile node at fixed position is required.
(105) Mode 3 to mode 0: when multiple base station coordination is not required or when routing to local mobility agent is recovered, main mobile access gateway can return from relay mode to basic registration mode.
(106) Mode 0 to mode 3: when multiple base station coordinated service for mobile node of position movement is required, main mobile access gateway requests re-registration to relay mode.
(107) Mode 0 to mode 3: when current local mobility agent is invalid or overloaded, main mobile access gateway request re-registration to relay mode.
(108) Mode 1 to mode 3: in multiple base station coordinated service, when mobile node fixed before is moved, main mobile access gateway can change from group mode to relay mode.
(109) Mode 3 to mode 1: in multiple base station coordinated service, when mobile node moved before stops movement, main mobile access gateway can change from relay mode to group mode.

As understood from Fig. 10, in the embodiment of the present invention, mode can be changed among modes 0, 1 and 3 mutually and mode can be changed between modes 2 and 0 mutually. The above change conditions between modes is only an example for describing the embodiment of the present invention and the present invention is not limited thereto. Change between the above modes and other modes except the above modes can be made even under other conditions.

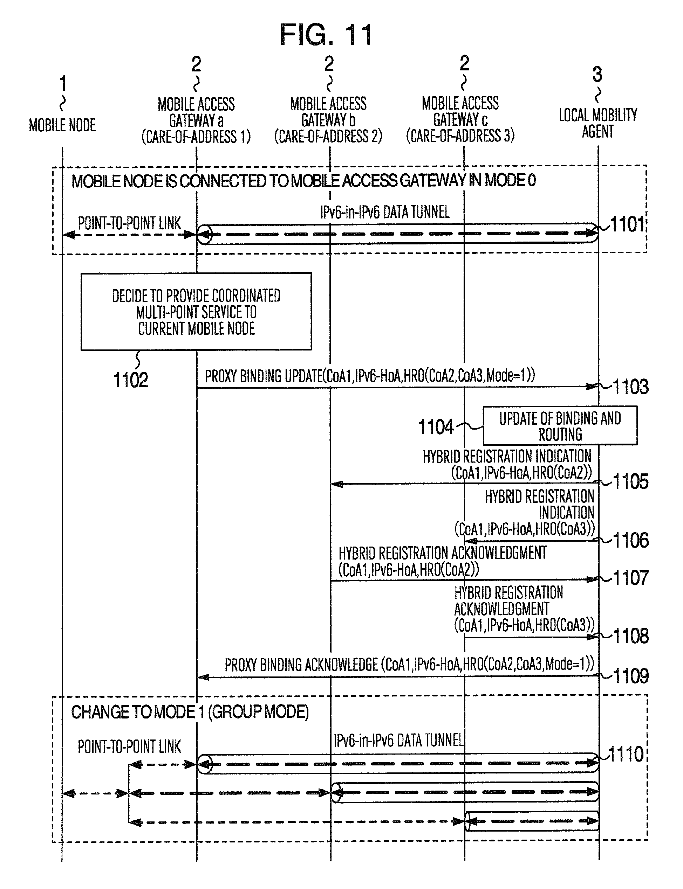

Figs. 11 to 13 show concrete processes of change between modes according to an embodiment of the present invention. Concrete description of the same steps as related steps of Figs. 2 and 8 is omitted.

Fig. 11 shows an example of change process from mode 0 to mode 1 providing service to IPv6 node. First, mobile node is operated in mode 0 and registered in mobile access gateway a and local mobility agent 3 (1101). When mobile access gateway a (main mobile access gateway) performs coordinated service with mobile access gateways b and c (1102), PBU information is transmitted to local mobility agent (1103). In PBU signaling, HRO is requisite and address of related mobile access gateway and necessary mode are preserved. As requested in RFC 5213, main care-of-address 1 (address of main mobile access gateway a) is set in source address of PBU signaling or source address of data packet. When the PBU is received, local mobility agent examines HRO and transmits HRI to related mobile access gateways b and c (1105 and 1106). When it is successful, local mobility agent receives HRA from mobile access agents b and c (1107 and 1108) and local mobility agent establishes local binding table to transmit successful PBA to mobile access gateway a (1109). Thereafter, three mobile access gateways and local mobility agent start group mode (mode 1). As viewed from IPv6 node, only IPv6-in-IPv6 tunnel is required in such situation and is used to make data transmission between mobile access gateway and local mobility agent. In data routing 1101 and 1110, point-to-point data route between mobile access gateway 2 and mobile node 1 is transferred by mobile communication base station 5.

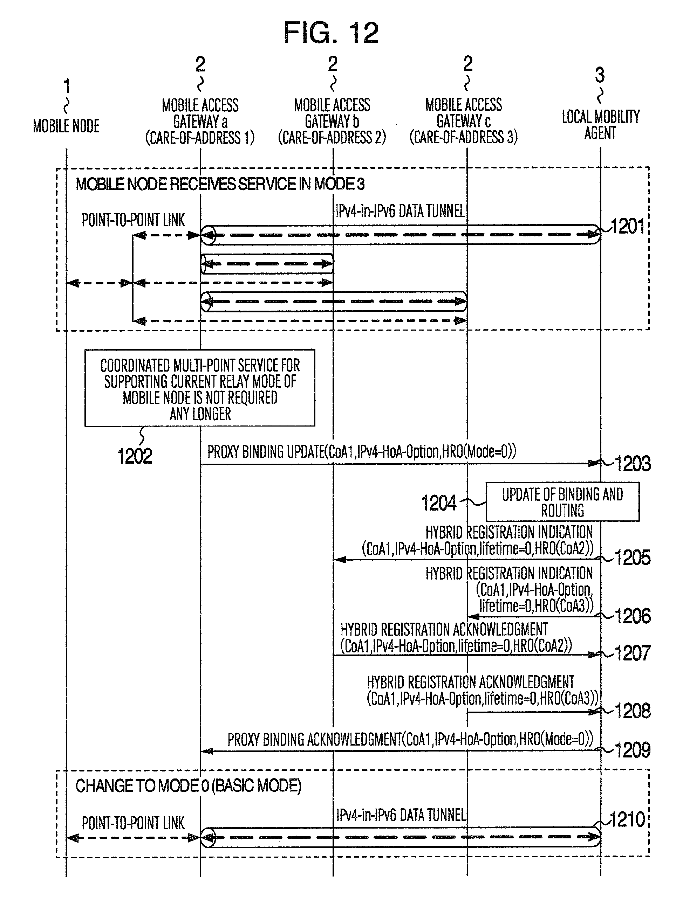

Fig. 12 shows an example of change process from mode 3 to mode 0 providing service to IPv4 node. First, mobile node is operated in mode 3 and is registered in mobile access gateways a, b and c and local mobility agent (1201). When it is not necessary to continue coordinated service (1202), mobile access gateway a (main mobile access gateway) transmits PBU information to local mobility agent 3 (1203). In PBU signaling, HRO is requisite and necessary mode (mode 0) is preserved. As requested in RFC 5213, main care-of-address 1 (address of main mobile access gateway a) is set in source address of PBU signaling or source address of data packet. When the PBU is received, local mobility agent examines HRO and transmits HRI to related mobile access gateways b and c (1205 and 1206). When it is successful, local mobility agent receives HRA from mobile access gateways b and c (1207 and 1208) and updates local binding table to transmit successful PBA to mobile access gateway a (1209). Thereafter, mobile access gateway a and local mobility agent can change mode to basic mode (mode 0). As viewed from IPv4 node, only IPv4-in-IPv6 tunnel is required in such situation and is used to make data transmission between mobile access gateway and local mobility agent. In data routing 1201 and 1210, point-to-point data route between mobile access gateway 2 and mobile node 1 is transferred by mobile communication base station 5.

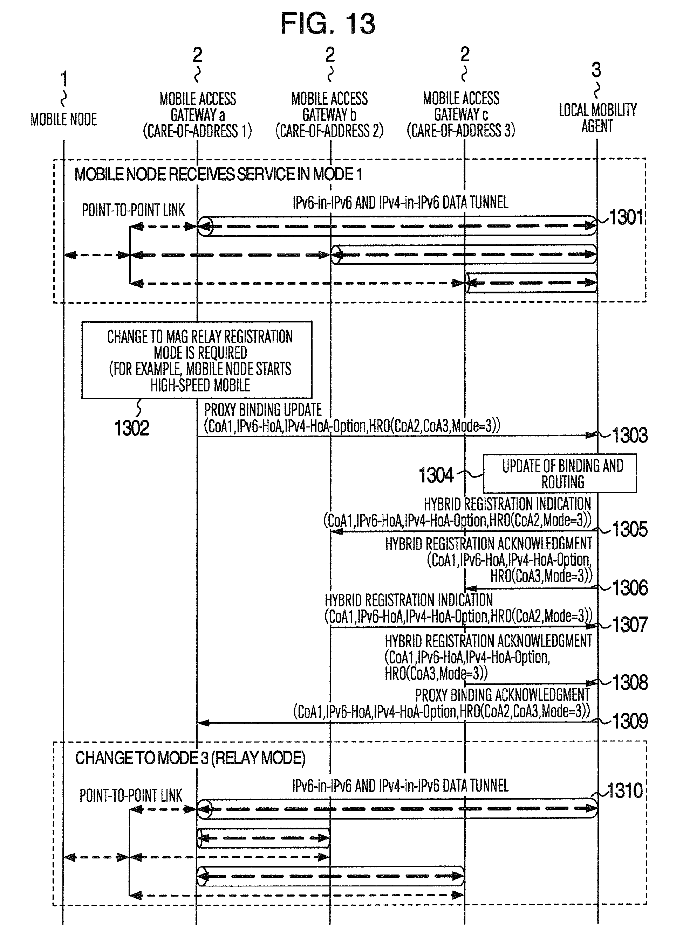

Fig. 13 shows an example of change process from mode 1 to mode 3 providing service to IPv4/IPv6 dual stack node. First, mobile node is operated in mode 1 and is registered in mobile access gateways a, b and c and local mobility agent (1301). For example, when mobile node starts to be moved and requires to change mode to mode 3 (1302), mobile access gateway a (main mobile access gateway) transmits PBU information to local mobility agent 3 (1303). In PBU signaling, HRO is requisite and necessary mode (mode 3) and related mobile access gateways (mobile access gateways 2 and 3) are preserved. As requested in RFC 5213, main care-of-address 1 (address of main mobile access gateway 1) is set in source address of PBU signaling or source address of data packet. When the PBU is received, local mobility agent examines HRO and transmits HRI to related mobile access gateways b and c (1305 and 1306). When it is successful, local mobility agent receives HRA from mobile access gateways b and c (1307 and 1308) and updates local binding table to transmit successful PBA to mobile access gateway a (1309). Thereafter, three mobile access gateways and local mobility agent can change mode to relay mode (mode 3). As viewed from IPv4/IPv6 dual stack node, both of IPv4-in-IPv6 tunnel and IPv6-to-IPv6 tunnel are required in such situation and are used to make data transmission between mobile access gateway and local mobility agent. In data routing 1301 and 1310, point-to-point data route between mobile access gateway 2 and mobile node 1 is transferred by mobile communication base station 5.

Fig. 14 shows an example of binding table according to an embodiment of the present invention. Basically, binding cache table entries (BCE) (contents of respective lines of Fig. 14) require to have basic contents prescribed by RFC 5213 and RFC 3775. The contents concerning support of hybrid registration are increased in the present invention in addition to the basic BCE contents and alternative care-of-addresses, hybrid registration care-of-addresses and related traffic proportional allotment are contained. Table entries of the binding table 1400 of Fig. 14 contain mobile node ID 1401, basic contents 1402 of binding update table in prior art, registration mode 1403 indicating any one of 0 (basic mode), 1 (group mode), 2 (direct mode) and 3 (relay mode) of registration modes, number of necessary care-of-addresses 1404, main care-of-address 1405 of main mobile access gateway, traffic percentage 1406 in charge of main care-of-address, care-of-addresses 1407 and 1409 of mobile access gateway for hybrid registration, traffic percentages 1408 and 1410 in charge of the care-of-address, other care-of-address 1411 of mobile access gateway for hybrid registration and traffic percentage 1412 in charge of the care-of-address.

Technical effect realizable in the embodiment is at least one of the following:
1) Hybrid routing registration of proxy mobile IPv6 is supported and mobile access gateway and local mobility agent can select routing of data packet flexibly for mobile node.
2) Proxy mobile IPv6 protocol can support requirement of future mobile network.
3) High-speed failure recovery of mobile access gateway is supported.

As described above, the radio communication system and method of the present invention can realize hybrid registration under proxy mobile IPv6 protocol. That is, new hybrid registration by mobile access gateway and local mobility agent can be performed in addition to conventional basic registration method and accordingly there can be provided equipment and method of supporting flexible data routing with high efficiency. Function of the radio communication system can be improved and accordingly it can be expected that the radio communication system is widely applied to radio communication industry.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A radio communication system including base stations (5) connected to mobile nodes (1) by radio, node registration devices (2) connected to the base stations (5) to control the base stations (5) and register registration information of the mobile nodes (1) representing contents of connection of the mobile nodes to the node registration devices through the base stations into node information management device (3) and the node information management devices (3) to manage address information of the mobile nodes in the registration information registered by the node registration devices (2), the radio communication system connecting the mobile nodes to a public network, wherein
a combination of the base station (5) and the node registration device (2) to control the base station (5) and a combination of the base station (5), the node registration device (2) to control the base station (5), another node registration device (2) and one or a plurality of equipments of the node information management device (3) configure a plurality of different communication routes and the radio communication system utilizes any of the plurality of different communication routes to realize connection from the mobile nodes to the public network.

2. A radio communication system according to Claim 1, wherein
the node registration device (2) registers route information containing address information of other node registration devices (2) concerning the communication route to be utilized into the node information management device (3) in addition to the registration information and
the node information management device (3) transmits, after reception of the registration information having the route information added thereto, hybrid registration indication to the other node registration device (2) indicated by the address information on the basis of the address information contained in the route information and returns, after reception of hybrid registration acknowledgment from the other node registration device (2), registration acknowledgment containing the route information to the node registration device (2) to which the registration information has been transmitted, the node registration device (2) which has received the registration acknowledgment starting connection using the communication route from the mobile node to the public network in coordination with the other node registration device.

3. A radio communication system according to Claim 1 or 2, wherein
the plurality of communication routes contain at least first to fourth communication routes and
the first communication route extends from one base station (5) which makes radio communication with the mobile node (1) through one node registration device (2) which controls the base station (5) to the node information management device (3) and then reaches the public network,
the second communication route extending from a plurality of base stations (5) which make radio communication with the mobile node (1) through a plurality of node registration devices (2) which control the base stations to the node information management device (3) and then reaching the public network,
the third communication route extending from one base station (5) which makes radio communication with the mobile node (1) through one node registration device (2) which controls the base station (5) and further another node registration device (2) to the node information management device (3) and then reaching the public network,
the fourth communication route extending from one base station (5) which makes radio communication with the mobile node (1) through one node registration device which controls the base station (5) to the public network directly without passing through the node information management device (3).

4. A radio communication system according to Claim 3, wherein
the communication route can be handed off among the first, second and third communication routes mutually and the communication route can be handed off between the first and fourth communication routes mutually.

5. A radio communication system according to Claim 4, wherein
mutual handoff among the first, second and third communication routes is performed on the basis of judgment as to whether the mobile node (1) requires multiple base station coordinated service or not, so that when it is judged that multiple base station coordinated service is not required, the communication route is handed off to the first communication route and when it is judged that multiple base station coordinated service is required, the communication route is handed off to the second or third communication route on the basis of connection situation between currently used node registration device (2) and node information management device (3), and
mutual handoff between the first and fourth communication routes is performed on the basis of whether the node registration device (2) and the node information management device (3) support direct routing on the basis of policy designated by local mobile operating company, so that when it is judged that direct routing is supported and it is decided that the node registration device (2) performs direct routing, the communication route is handed off to the fourth communication route.

6. A radio communication system according to at least one of Claims 1 to 5, wherein the radio communication system adopts proxy mobile IPv6 protocol.

7. A radio communication method in a radio communication system including base stations (5), node registration devices (2) and node information management devices (3), the method including:
a first step in which the base station is connected to the mobile node (1) by radio;
a second step in which the node registration device (2) is connected to the base station to control the base station and register registration information of the mobile node (1) representing contents of connection of the mobile node (1) to the node registration device (3) through the base station (5) into node information management device (3); and
a third step in which the node information management device (3) is connected to a public network and manages address information of the mobile node (1) in the registration information registered by the node registration device (2),
the radio communication system connecting the mobile node to the public network, wherein
a combination of the base station (5) and the node registration device (2) to control the base station (5) and a combination of the base station (5), the node registration device (2) to control the base station (5), another node registration device (2) and one or a plurality of equipments of the node information management device (3) configure a plurality of different communication routes and the radio communication system utilizes any of the plurality of different communication routes to realize connection from the mobile node to the public network.

8. A radio communication method according to Claim 7, wherein
in the second step, the node registration device (2) registers route information containing address information of another node registration device concerning the communication route to be utilized into the node information management device (3) in addition to the registration information and
in the third step, after the node information management device (3) receives the registration information having the route information added thereto, the node information management device (3) instructs the other node registration device (2) indicated by the address information to make hybrid registration on the basis of the address information contained in the route information and after the node information management device (3) receives hybrid registration acknowledgment from the other node registration device, the node information management device (3) returns registration acknowledgment containing the route information to the node registration device (2) which has transmitted the registration information and the node registration device (2) which has received the registration acknowledgment starts connection using the communication route from the mobile node to the public network in coordination with the other node registration device (2).

9. A radio communication method according to Claim 7 or 8, wherein
the plurality of communication routes include at least first, second, third and fourth communication routes and
the first communication route extends from one base station (5) which makes radio communication with the mobile node (1) through one node registration device (2) which controls the base station (5) to the node information management device (3) and then reaches the public network,
the second communication route extending from the plurality of base stations (5) which make radio communication with the mobile node (1) through the plurality of node registration devices (3) each controlling the base station (5) to the node information management device (3) and then reaching the public network,
the third communication route extending from one base station (5) which makes radio communication with the mobile node (1) through one node registration device (2) which controls the base station (5) and further another node registration device (2) to the node information management device (3) and then reaching the public network,
the fourth communication route extending from one base station (5) which makes radio communication with the mobile node (1) through one node registration device (2) which controls the base station (5) to the public network directly without passing through the node information management device (3).

10. A radio communication method according to Claim 9, wherein
the communication route can be handed off among the first, second and third communication routes mutually and the communication route can be handed off between the first and fourth communication routes mutually.

11. A radio communication method according to Claim 10, wherein
mutual handoff among the first, second and third communication routes is performed on the basis of judgment as to whether the mobile node (1) requires multiple base station coordinated service or not, so that when it is judged that multiple base station coordinated service is not required, the communication route is handed off to the first communication route and when it is judged that multiple base station coordinated service is required, the communication route is handed off to the second or third communication route on the basis of connection situation between currently used node registration device (2) and node information management device (3), and
mutual handoff between the first and fourth communication routes is performed on the basis of whether the node registration device (2) and the node information management device (3) support direct routing on the basis of policy designated by local mobile operating company, so that when it is judged that direct routing is supported and it is decided that the node registration device (2) performs direct routing, the communication route is handed off to the fourth communication route.

12. A radio communication method according to at least one of Claims 7 to 11, wherein the radio communication system adopts proxy mobile IPv6 protocol.
